# FASCICULE DE BREVET EUROPEEN

(11) **EP 1 859 983 B1**
(45) Date de publication et mention de la délivrance du brevet: **04.02.2009**
(21) Numéro de dépôt: 07290638.1
(22) Date de dépôt: 16.05.2007
(51) Int. Cl.: B60K 11/04, B62D 25/08

(54) **Face avant de véhicule automobile escamotable en choc, et véhicule automobile correspondant.**
Bei einem Aufprall einknickender Frontmodul für ein Kraftfahrzeug und entsprechendes Kraftfahrzeug
Front module of a motor vehicle that retracts in the event of a crash and corresponding motor vehicle.

(30) Priorité: 22.05.2006 FR 0604571
(43) Date de publication de la demande: 28.11.2007
(73) Titulaire: Faurecia Bloc Avant, 92000 Nanterre (FR)
(72) Inventeur: Riviere, Caroline, 25700 Valentigney (FR); Laurent, Claude, 25420 Voujeaucourt (FR); Borde, Patrick, 25400 Audincourt (FR)
(74) Mandataire: Domenego, Bertrand

(56) Documents cités:
- EP-A- 1 568 552
- WO-A-03/024747
- FR-A- 2 820 710
- FR-A- 2 872 477

## Description

Le présente invention concerne une face avant de véhicule automobile, du type comprenant un support destiné à porter au moins un radiateur et/ou un groupe moto-ventilateur, et des moyens de fixation du support sur la caisse de véhicule automobile, permettant un déplacement du support d'une position avancée en l'absence de choc, vers une position reculée en cas de choc avec un piéton, avec une absorption d'énergie, les moyens de fixation comprenant au moins une attache métallique comprenant une première partie fixée sur une région supérieure du support et une deuxième partie destinée à être fixée sur la caisse du véhicule automobile.

Dans un choc « piéton », le bassin ou le fémur d'un piéton heurte le nez du capot d'un véhicule automobile, qui se déforme et vient en appui sur la région supérieure de la face avant, qui subit un impact sur sa partie supérieure, l'impact étant dirigé vers l'arrière et vers le bas, avec un angle par rapport à la verticale de l'ordre de 40 à 50°.

La face avant constitue un point dur sous le capot, et risque de blesser le piéton.

FR 2 872 477 propose une face avant articulée à une extrémité inférieure autour d'un axe transversal du véhicule, et fixée à une extrémité supérieure sur la caisse par l'intermédiaire de coulisseaux mobiles dans des coulisses à l'encontre de ressorts d'absorption d'énergie, afin de permettre à la face avant de se reculer en absorbant de l'énergie, pour protéger le piéton et éviter l'endommagement de la face avant.

Toutefois, les coulisseaux sont susceptibles de se coincer dans les coulisses en se mettant de travers à l'intérieur de celles-ci.

Le document EP 1 568 552 A décrit une face avant selon le préambule de la revendication 1.

Un but de l'invention est de proposer une face avant de véhicule automobile possédant des moyens de fixation de la face avant sur la caisse permettant un guidage fiable de la face avant entre sa position avancée et une position reculée.

A cet effet, l'invention a pour objet une face avant du type précité, caractérisée en ce que la première partie et la deuxième partie sont reliées par une partie intermédiaire arrondie autour d'un axe d'enroulement, la ou chaque attache étant disposée de façon à se déformer, en cas de choc avec un piéton, par enroulement d'un côté de la partie intermédiaire et déroulement de l'autre côté pour absorber de l'énergie.

Selon d'autres modes de réalisation, la face avant comprend une ou plusieurs des caractéristiques suivantes, prise(s) isolément ou selon toutes les combinaisons techniquement possibles :
- la face avant comprend deux attaches, chaque attache étant fixée sur une traverse supérieure du support, et destinée à être fixée sur la caisse du véhicule automobile ;
- la partie intermédiaire de chaque attache comprend une âme arrondie et deux ailes ;
- une aile supérieure de l'attache est prolongée par la première partie, et une aile inférieure de l'attache est prolongée par la deuxième partie ;
- les moyens de fixation comprennent des moyens de renfort destinés à maintenir l'écartement entre les ailes de la ou chaque attache ;
- les moyens de renfort se présentent sous la forme de nervures en matière plastique s'étendant entre les ailes de la ou chaque attache ;
- les nervures sont venues de matière avec le support moulé en matière plastique ;
- la première partie de l'attache est surmoulée par le support fabriqué en matière plastique moulé ; et
- l'axe d'enroulement de la ou chaque attache est destiné à être parallèle à un axe transversal du véhicule.

L'invention concerne également un véhicule automobile comprenant une caisse et une face avant telle que définie ci-dessus, fixée sur la caisse à l'aide de moyens de fixation.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'une face avant conforme à l'invention fixée sur une caisse de véhicule automobile;
- la figure 2 est une vue de détail de la figure 1 ;
- la figure 3 est une vue schématique en perspective d'une attache de fixation de la face avant de la figure 1 sur la caisse ;
- les figures 4 à 6 sont des vues de côté de la face avant de la figure 1, illustrant une déformation d'une attache pendant un choc « piéton » ;
- la figure 7 est une vue en perspective analogue à celle de la figure 2, illustrant une attache selon une variante de l'invention ; et
- les figures 8 et 9 sont des vues de face d'attaches selon des variantes de l'invention.

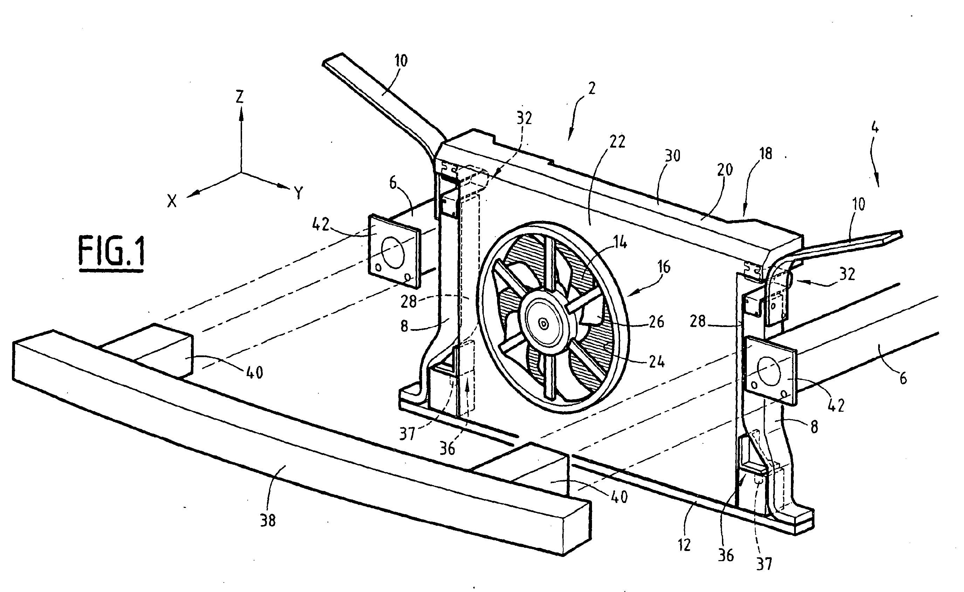

Dans la description qui va suivre, les termes « avant », « arrière », « longitudinal », « latéral », « transversal », « supérieur » et « inférieur » s'entendent par référence au repère orthogonal usuel des véhicules automobiles, représenté sur la figure 1, et comprenant :
- un axe longitudinal X-X, horizontal et dirigé de l'arrière vers l'avant,
- une axe transversal Y-Y, horizontal et dirigé de la droite vers la gauche, et
- un axe vertical Z-Z, dirigé du bas vers le haut.

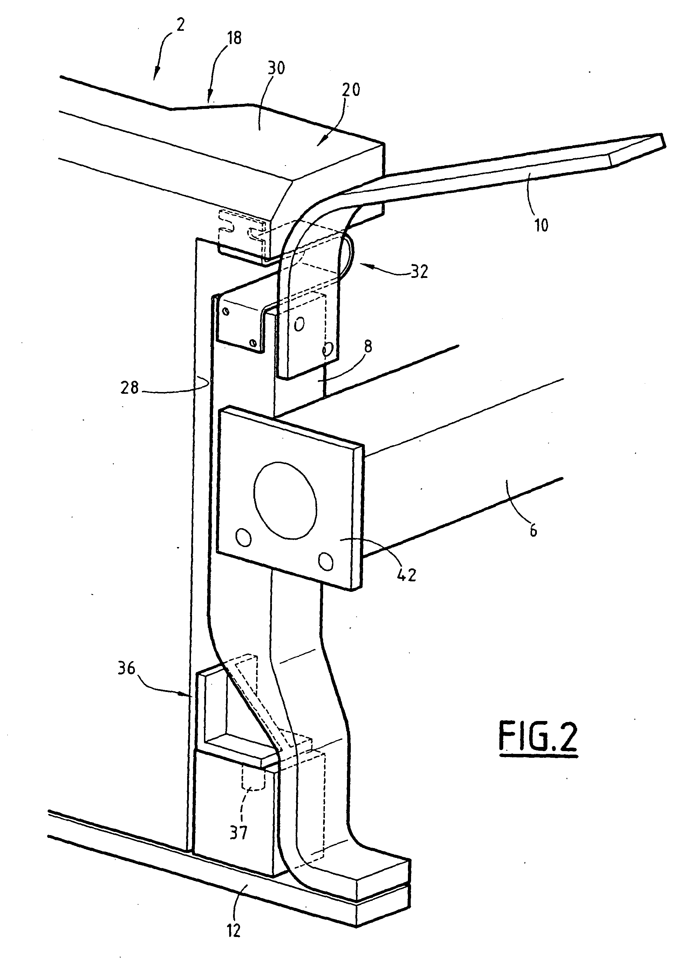

Telle que représentée sur les figures 1 et 2, une face avant 2 est fixée à l'avant de la caisse 4 d'un véhicule automobile.

La caisse 4 comprend deux longerons 6 ou « brancard », deux piliers 8, deux bras de renfort 10, et une traverse 12.

Chaque longeron 6 est fixé par son extrémité arrière à un tablier structurel (non représenté) du véhicule, et s'étend longitudinalement vers l'avant.

Chaque pilier 8 est fixé par sa partie médiane à l'extrémité avant d'un longeron 6 respectif, et s'étend sensiblement verticalement.

Chaque bras 10 s'étend latéralement vers l'extérieur et longitudinalement vers l'arrière, depuis l'extrémité supérieure d'un pilier 8 respectif jusqu'à une paroi latérale (non représentée) de la caisse 4.

La traverse 12 s'étend transversalement et relie les extrémités inférieures des piliers 8.

La face avant 2 comprend un radiateur 14, un groupe motoventilateur (GMV) 16, et un support 18 pour porter le radiateur 14 et le GMV 16.

Le support 18 comprend un cadre 20 et un carénage 22 de canalisation d'un flux d'air disposé à l'avant du cadre 20. Le carénage 22 possède une ouverture 24 circulaire d'entrée d'air.

Le radiateur 14 est porté par le cadre 20 et s'étend en travers de celui-ci. Le GMV 16 est porté par le carénage 22, une hélice 26 du GMV 16 s'étendant en travers de l'ouverture 24 pour forcer un flux d'air à travers le radiateur 14. Le radiateur 14 est visible à travers l'ouverture 24, derrière l'hélice 26.

La face avant 2 est disposée dans un espace de réception délimité par les deux piliers 8 et la traverse 12.

Le cadre 20 comprend deux montants 28 et une traverse supérieure 30 possédant des portions latérales d'extrémité faisant saillie latéralement par rapport aux montants 28.

La face avant 2 comprend des moyens de fixation du support 18 sur la caisse 4. Les moyens de fixation comprennent deux cavaliers ou attaches 32 métalliques à déformation programmée en cas de choc, chaque attache 32 reliant une des portions d'extrémité de la traverse 30 à une extrémité supérieure du pilier 8 adjacent.

Les attaches 32 sont distinctes et espacées transversalement.

Les moyens de fixation comprennent également deux brides 36 d'appui de l'extrémité inférieure du support 18 sur la traverse 12.

Chaque bride 36 est fixée sur un des montants 28, et comprend un pion 37 s'étendant verticalement vers le bas, reçu dans un bloc en caoutchouc naturel ou synthétique d'amortissement des vibrations, le bloc étant lui-même fixé sur la traverse 12.

La caisse 4 comprend une poutre 38 de pare-chocs fixée par l'intermédiaire d'absorbeurs de chocs 40 sur des flasques 42 portés par les extrémités avant des longerons 6. En l'absence de choc, la poutre 38 s'étend devant la face avant 2, à distance de celle-ci

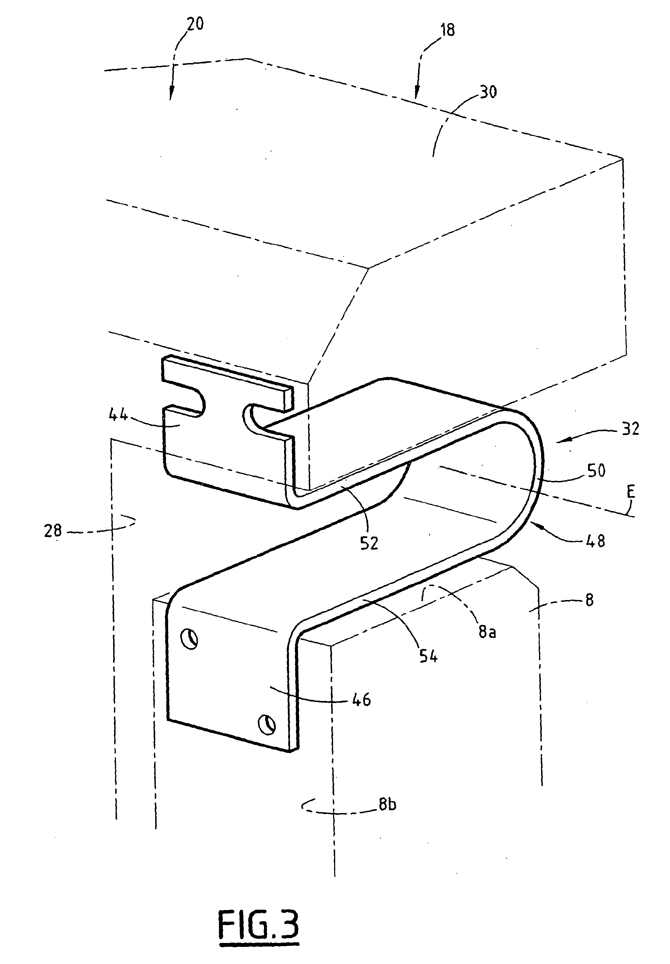

Tel que représentée sur la figure 3, chaque attache 32, comprend une partie 44 de fixation de l'attache 32 sur le support 18, une partie 46 de fixation de l'attache sur un pilier 8, et une partie 48 intermédiaire de liaison des parties 44 et 46, à déformation programmée en cas de choc.

La partie 48 est profilée d'axe transversal, et possède une section en U. La partie 48 comprend une âme 50 arrondie autour d'un axe E d'enroulement parallèle à l'axe Y, et deux ailes 52, 54, sensiblement parallèles, s'étendant chacune dans un plan sensiblement horizontal, vers l'avant à partir de l'âme 50.

La partie 44 prolonge l'aile 52 verticalement vers le haut. La partie 46 prolonge l'aile 54 verticalement vers le bas.

Le support 18 est par exemple réalisé en matière plastique moulée, et au moins la partie 44 est surmoulée par le support 18 afin de réaliser la liaison facilement et à coût faible. En variante, la partie 44 est boulonnée ou rivetée sur la traverse 30.

La traverse 30 est en appui verticalement sur l'aile 52.

L'aile 54 inférieure de l'attache 50 est en appui vertical sur une surface 8a d'extrémité supérieure d'un pilier 8, et la partie 46 est fixée sur une face 8b de ce pilier 8 tournée vers l'avant, par exemple par boulonnage ou rivetage.

Les axes E des âmes 50 des deux attaches 32 sont alignés.

Les attaches 32 sont obtenues très facilement par pliage de feuilles métalliques.

Les attaches 32 permettent le déplacement de la face avant 2 d'une position avancée en l'absence de choc, vers une position reculée en cas de choc « piéton ».

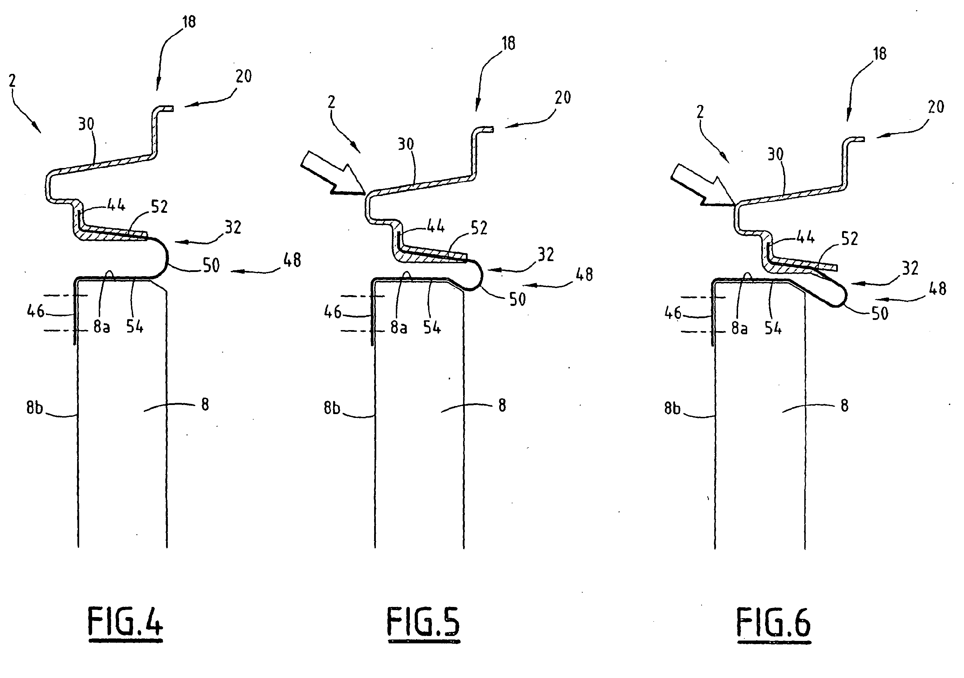

Tel que représenté sur les figures 4 à 6, en cas de choc provoquant un déplacement de la traverse 30 vers l'arrière et vers le bas par rapport au pilier 8, chaque attache 32 se déforme par enroulement de l'âme 50 du côté de son aile 52, et déroulement du côté de son aile 54. Il s'ensuit que son aile 52 se raccourcit, tandis que son aile 54 s'allonge. Cette déformation s'effectue avec une absorption d'énergie.

La déformation des attaches 32 permet le déplacement vers l'arrière du support 18 pour éviter l'endommagement des équipements portés par la face avant 2, et pour protéger le piéton.

La face avant 2 pivote autour de sa partie inférieure vers l'arrière.

La rotation vers l'arrière de la face avant 2 est permise d'une part par l'élasticité du support 18 lui-même pouvant se fléchir légèrement, et également par l'élasticité de la fixation du support 18 sur la traverse 12 par l'intermédiaire des brides et des blocs élastiques. Cette flexibilité est suffisante pour permettre l'inclinaison de la face avant 2 de 5 à 10°.

Les attaches 32 possèdent une rigidité verticale suffisante pour soutenir le poids de la face avant 2.

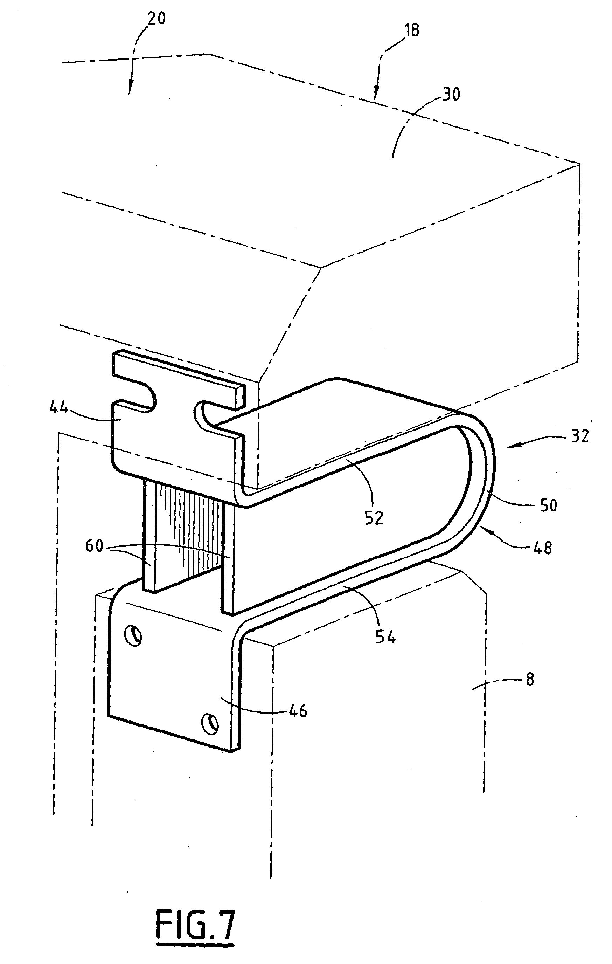

Dans la variante illustrée sur la figure 7, une attache 32 comprend des nervures 60 de renfort en matière plastique s'étendant entre les ailes 52, 54 de l'attache pour maintenir un écartement entre ces ailes 52 et 54.

Les nervures 60 sont par exemple venues de matière avec le support 18 moulé en matière plastique et surmoulé sur les attaches 32.

De telles nervures augmentent la rigidité de l'attache pour supporter le poids de la face avant, et évitent l'affaissement de l'attache en cas de choc piéton pour garantir la déformation de l'attache par enroulement/déroulement avec absorption d'énergie.

Les ailes d'une attache ne sont pas nécessairement parallèles à l'état de repos de l'attache. Elles peuvent s'évaser légèrement depuis l'âme.

Dans le mode de réalisation des figures 1 à 6, on note que la surface 8a d'extrémité supérieure de chaque pilier 8 comprend une portion arrière inclinée.

Cette portion est inclinée suivant la direction principale de déplacement de la traverse supérieure du support en cas de choc « piéton » pour favoriser la bonne déformation par enroulement/ déroulement de l'attache.

En variante, en position de repos de l'attache, les ailes s'étendent de part et d'autre d'un plan médian légèrement incliné vers l'arrière et vers le bas afin que l'attache soit orientée initialement dans la direction principale de déplacement de la traverse du support en cas de choc « piéton ».

Dans le mode de réalisation des figures 1 à 6, les parties 44 et 46 de fixation de l'attache 32 sur le support 18 et la caisse 4 sont alignées verticalement.

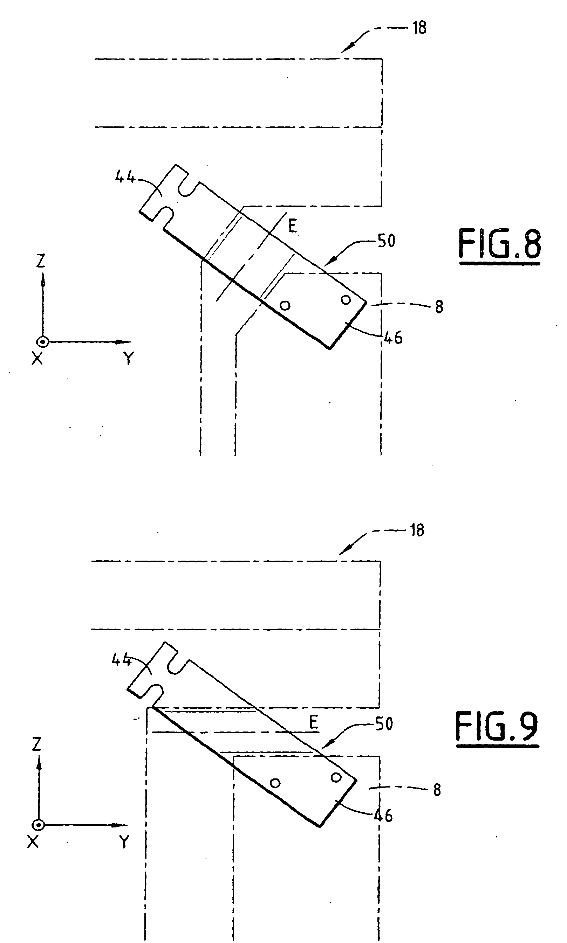

En variante, comme illustré sur la figure 9, ces parties 44 et 46 sont décalées transversalement l'une par rapport à l'autre, et la partie intermédiaire s'étend en hélice autour de l'axe d'enroulement E dirigé transversalement.

La déformation de l'attache se produit de façon identique, par enroulement / déroulement.

Dans une variante illustrée sur la figure 8, une attache 32 est identique à celles du mode de réalisation des figures 1 à 6, mais l'axe E d'enroulement fait un angle avec l'axe Y.

Dans ce cas, de préférence, les axes E des deux attaches sont inclinés de façon symétrique par rapport à un plan longitudinal médian du véhicule.

Les deux attaches sont de préférence alignées selon un axe transversal. Toutefois, en variante, les attaches sont non-alignées selon un axe vertical ou transversal, et sont décalées l'une par rapport à l'autre verticalement et/ou longitudinalement.

## Revendications

1. Face avant (2) de véhicule automobile, du type comprenant un support (18) destiné à porter au moins un radiateur (14) et/ou un groupe moto-ventilateur (16), et des moyens de fixation de support (18) sur la caisse (4) du véhicule automobile, permettant un déplacement du support d'une position avancée en l'absence de choc, vers une position reculée en cas de choc avec un piéton, avec une absorption d'énergie, les moyens de fixation comprenant au moins une attache métallique (32) à déformation programmée possédant une première partie (44) fixée sur une région supérieure du support (18) et une deuxième partie (46) destinée à être fixée sur la caisse (4),
**caractérisée en ce que** la première partie (44) et la deuxième partie (46) sont reliées par une partie intermédiaire (48) arrondie autour d'un axe d'enroulement (E), la ou chaque attache étant disposée de façon à se déformer, en cas de choc avec un piéton, par enroulement d'un côté de la partie intermédiaire (48) et déroulement de l'autre côté pour absorber de l'énergie.

2. Face avant selon la revendication 1, **caractérisée en ce qu'**elle comprend deux attaches (32), chaque attache étant fixée sur une traverse (30) supérieure du support (18), et destinée à être fixée sur la caisse (4) du véhicule automobile.

3. Face avant selon la revendication 1 ou 2, **caractérisée en ce que** la partie intermédiaire (48) de chaque attache (32) comprend une âme (50) arrondie et deux ailes (52, 54).

4. Face avant selon la revendication 3, **caractérisée en ce qu'**une aile supérieure de l'attache (32) est prolongée par la première partie (44), et une aile (54) inférieure de l'attache (32) est prolongée par la deuxième partie (46).

5. Face avant selon la revendication 3 ou 4, **caractérisée en ce que** les moyens de fixation comprennent des moyens (60) de renfort destinés à maintenir l'écartement entre les ailes (52, 54) de la ou chaque attache (32).

6. Face avant selon l'une quelconque des revendications 3 à 5, **caractérisée en ce que** les moyens de renfort se présentent sous la forme de nervures (60) en matière plastique s'étendant entre les ailes (32, 54) de la ou chaque attache (32).

7. Face avant selon la revendication 6, **caractérisée en ce que** les nervures (60) sont venues de matière avec le support (18) moulé en matière plastique.

8. Face avant selon l'une quelconque des revendications précédentes, **caractérisée en ce que** la première partie (44) de l'attache (32) est surmoulée par le support (18) fabriqué en matière plastique moulé.

9. Face avant selon l'une quelconque des revendications précédentes, **caractérisé en ce que** l'axe d'enroulement (E) de la ou chaque attache est destiné à être parallèle à un axe transversal du véhicule.

10. Véhicule automobile comprenant une caisse, **caractérisé en ce qu'**il comprend une face avant selon l'une quelconque des revendications précédentes, dont les deuxièmes parties des attaches sont fixées sur la caisse.

## Claims

1. Front face (2) of a motor vehicle, of the type comprising a support (18) which is intended to carry at least one radiator (14) and/or a motor-fan unit (16), and means for fixing the support (18) onto the body (4) of the motor vehicle that allow displacement of the support from an advanced position, in the absence of an impact, to a moved-back position in the event of an impact with a pedestrian, with the absorption of energy, the fixing means comprising at least one metal fastener (32) of the planned-deformation type which possesses a first part (44) which is fixed onto an upper region of the support (18) and a second part (46) which is intended to be fixed onto the body (4),
**characterised in that** the first part (44) and the second part (46) are connected by an intermediate part (48) which is rounded about an axis of coiling (E), the fastener, or each fastener, being disposed in such a way as to deform, in the event of an impact with a pedestrian, as a result of the coiling-up of one side of the intermediate part (48) and the uncoiling of the other side in order to absorb the energy.

2. Front face according to claim 1, **characterised in that** it comprises two fasteners (32), each fastener being fixed onto an upper cross-member (30) of the support (18) and being intended to be fixed onto the body (4) of the motor vehicle.

3. Front face according to claim 1 or 2, **characterised in that** the intermediate part (48) of each fastener (32) comprises a rounded core (50) and two arms (52, 54).

4. Front face according to claim 3, **characterised in that** an upper arm of the fastener (32) is prolonged by the first part (44), and a lower arm (54) of the fastener (32) is prolonged by the second part (46).

5. Front face according to claim 3 or 4, **characterised in that** the fixing means comprise reinforcing means (60) which are intended to maintain the space between the arms (52, 54) of the fastener, or each fastener, (32).

6. Front face according to any of claims 3 to 5, **characterised in that** the reinforcing means are in the form of ribs (60) made of plastic material which extend between the arms (32, 54) of the fastener, or each fastener,(32).

7. Front face according to claim 6, **characterised in that** the ribs (60) are in one piece with the support (18) which is moulded from plastic material.

8. Front face according to any of the preceding claims, **characterised in that** the first part (44) of the fastener (32) is over-moulded by the support (18) which is manufactured from moulded plastic material.

9. Front face according to any of the preceding claims, **characterised in that** the axis of coiling (E) of the fastener, or of each fastener, is intended to be parallel to a transverse axis of the vehicle.

10. Motor vehicle comprising a body, **characterised in that** said vehicle comprises a front face according to any of the preceding claims, the second parts of the fasteners of which front face are fixed onto the body.

## Patentansprüche

1. Kraftfahrzeug-Front (2) des Typs, der aufweist:
einen Träger (18), der zum Tragen von mindestens einem Kühler (14) und/oder einer Kühler-Lüfter-Gruppe (16) vorgesehen ist, und Mittel zum Befestigen des Trägers (18) an der Karosserie (4) des Kraftfahrzeugs, die ein Bewegen des Trägers aus einer vorspringenden Position in Abwesenheit eines Aufpralls in Richtung zu einer zurückgesetzten Position im Fall eines Zusammenstoßes mit einem Fußgänger mit einer Absorption von Energie zulassen, wobei die Befestigungsmittel mindestens ein Metallband (32) mit programmierter Verformung aufweisen, das einen ersten Teil (44), der an einem oberen Bereich des Trägers (18) befestigt ist, und einen zweiten Teil (46), der zum Befestigen an der Karosserie (4) vorgesehen ist, aufweist,
**dadurch gekennzeichnet, dass** der erste Teil (44) und der zweite Teil (46) durch einen Zwischenteil (48) miteinander verbunden sind, der um eine Wicklungsachse (E) gerundet ist, wobei die oder jede Befestigung so angeordnet ist, dass sie sich im Fall eines Zusammenstoßes mit einem Fußgänger durch Aufwickeln an einer Seite des Zwischenteils (48) und durch Abwickeln an der anderen Seite zum Absorbieren der Energie verformt.

2. Front gemäß Anspruch 1, **dadurch gekennzeichnet, dass** sie zwei Befestigungsbänder (32) aufweist, wobei jedes Befestigungsband an einem oberen Querträger (30) des Trägers (18) befestigt ist und zum Befestigen an der Karosserie (4) des Kraftfahrzeugs vorgesehen ist.

3. Front gemäß Anspruch 1 oder 2, **dadurch gekennzeichnet, dass** der Zwischenteil (48) jedes Befestigungsbandes (32) einen gerundeten Steg (50) und zwei Schenkel (52, 54) aufweist.

4. Front gemäß Anspruch 3, **dadurch gekennzeichnet, dass** ein oberer Schenkel des Befestigungsbandes (32) durch den ersten Teil (44) verlängert ist und ein unterer Schenkel (54) des Befestigungsbandes durch den zweiten Teil (46) verlängert ist.

5. Front gemäß Anspruch 3 oder 4, **dadurch gekennzeichet, dass** die Befestigungsmittel Verstärkungsmittel (60) aufweisen, die zum Halten des Abstands zwischen den Schenkeln (52, 54) des oder jedes Befestigungsbandes (32) vorgesehen sind.

6. Front gemäß einem der Ansprüche 3 bis 5, **dadurch gekennzeichnet, dass** die Verstärkungsmittel die Form von Rippen (60) aus Kunststoffmaterial aufweisen, die sich zwischen den Schenkeln (52, 54) des oder jedes Befestigungsbandes (32) erstrecken.

7. Front gemäß Anspruch 6, **dadurch gekennzeichnet, dass** die Rippen (60) aus einem Material mit dem Träger (18) sind, der aus Kunststoffmaterial gegossen ist.

8. Front gemäß einem der vorhergehenden Ansprüche, **dadurch gekennzeichnet, dass** der erste Teil (44) des Befestigungsbandes (32) von dem Träger (18) umformt ist, der aus gegossenem Kunststoffmaterial hergestellt ist.

9. Front gemäß einem der vorhergehenden Ansprüche, **dadurch gekennzeichnet, dass** die Wicklungsachse (E) des oder jedes Befestigungsbandes parallel zu einer Quer-Achse des Fahrzeugs vorgesehen ist.

10. Kraftfahrzeug, das eine Karosserie aufweist, **dadurch gekennzeichnet, dass** es eine Front gemäß einem der vorhergehenden Ansprüche aufweist, wobei die zweiten Teile der Befestigungsbänder an der Karosserie angebracht sind.
